# EUROPEAN PATENT SPECIFICATION

(11) **EP 3 419 819 B1**
(45) Date of publication and mention of the grant of the patent: **18.12.2019**
(21) Application number: 17711391.7
(22) Date of filing: 24.02.2017
(51) Int. Cl.: A43D 8/00, B29C 43/20, B29C 43/36, B29K 105/04, B29K 101/10, B29D 35/04, B29D 35/00, B29D 35/08, B29D 35/14

(54) **ADAPTABLE CAST ELASTOMER OUTSOLE TOOLING**
ANPASSBARES GUSSELASTOMERLAUFSOHLENWERKZEUG
OUTILLAGE ADAPTABLE EN ÉLASTOMÈRE COULÉ POUR SEMELLE D'USURE

(30) Priority: 24.02.2016 US 201662299241 P; 23.02.2017 US 201715440171
(43) Date of publication of application: 02.01.2019
(73) Proprietor: Nike Innovate C.V., Beaverton, Oregon 97005 (US)
(72) Inventor: KILGORE, Bruce J., Beaverton, Oregon 97005 (US)
(74) Representative: Müller-Boré & Partner Patentanwälte PartG mbB
(86) International application number: PCT/US2017/019404
(87) International publication number: WO 2017/147455

(56) References cited:
- US-A- 5 743 027
- US-A1- 2010 287 788
- US-A1- 2015 289 586

## Description

### FIELD OF THE INVENTION

The invention relates to a manufacturing tool as specified in independent claim land independent claim 6 and to a method for co-molding articles of footwear as specified in independent claim 7. Preferred embodiments are specified in the dependent claims.

### BACKGROUND OF THE INVENTION

It is often desirable for footwear outsoles to have a material pattern and/or texture, for instance, formed by components or lugs that are comprised of a material that differs from the material forming the remainder of the outsole surface. Generally, outsole components or lugs are fabricated independently and are injected, compression molded, or manually positioned into the midsole tool for processing. Such tooling is expensive and when integrated into the midsole molding process, requires sophisticated machinery. Further, in order to provide more than one outsole design for a single midsole silhouette, separate tooling is needed further increasing the expense for what is a fairly minimal change in design. Controlling flash occasioned by the use of multiple materials in forming the outsole also is a challenge and leads to additional labor steps to clean up the finished parts.

US 2010/0287788 A1 discloses a method of forming an article of footwear including injecting a first material into a first cavity of a mold assembly to form a sole assembly, injecting a second material into a second cavity of the mold assembly, a first last being suspended within the second cavity, to form an upper of the article of footwear about the first last.

### SUMMARY OF THE INVENTION

Aspects hereof relate to a multi-part mold for molding articles, for instance, articles of footwear having sole regions of differing materials forming a desired outsole surface material pattern. The multi-part mold includes a first mold portion configured as a three-dimensional contoured carrier mold that provides definition to the lateral surfaces of a resultant co-molded product; that is, the contoured carrier mold mirrors the contoured geometry of the lateral surfaces of the resultant product. The multi-part mold additionally includes a second mold portion configured as a flexible tray mold that cooperates with the carrier mold portion and provides definition to another (*e.g.,* bottom) surface of the resultant co-molded product. The tray mold portion generally includes at least one pod or cavity for receiving a first material that when cured/catalyzed, defines a patterned other (*e.g.,* bottom) surface of the resultant product. A multi-part mold having the structure as described herein permits interchangeability of multiple tray mold portions with a single carrier mold portion. A multi-part mold having the structure as described herein further enables low-cost, modular tooling for the production of certain products, for instance, cast footwear outsoles.

Aspects hereof further relate to a method of manufacturing co-molded products, for instance, articles of footwear, utilizing a multi-part mold that includes, at least, a carrier mold portion that provides definition to the lateral surfaces of a resultant co-molded product, and a tray mold portion that cooperates with the carrier mold portion and provides definition to another (*e.g.,* bottom) surface of the resultant product. A first material is applied to the desired regions (generally one or more pod/cavity portions) of the tray mold portion. The tray mold portion is positioned in cooperation with the carrier mold portion. Before the first material is completely cured/catalyzed, a second material is applied to the carrier mold portion having the tray mold portion in cooperation therewith. When both the first and second materials have completely cured/catalyzed, the co-molded product having the desired contours, and the desired material pattern on at least one surface, may be removed from the multi-part mold.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWING

Illustrative aspects hereof are described in detail below with reference to the attached drawing figures, which are incorporated by reference herein and wherein:
FIG. 1 depicts a perspective view of a two-part footwear mold having a carrier mold portion and a tray mold portion not in cooperation with one another, in accordance with aspects hereof;
FIG. 2 depicts a perspective view of the tray mold portion of FIG. 1 having a first material applied to a portion of a plurality of cavities included in a top surface thereof, in accordance with aspects hereof;
FIG. 3 depicts a perspective view of the tray mold portion of FIG. 2 in the process of being positioned in cooperation with the carrier mold portion of FIG. 1, in accordance with aspects hereof;
FIG. 4 depicts the carrier mold portion of FIG. 1 and the tray mold portion of FIG. 2 positioned in cooperation with one another, in accordance with aspects hereof;
FIG. 5 is a perspective view of the two-part footwear mold of FIG. 4 having a second material applied thereto, in accordance with aspects hereof;
FIG. 6 depicts a cross-sectional view of the two-part footwear mold of FIG. 5 taken along line 6.-6., in accordance with aspects hereof; and
FIG. 7 depicts an exemplary footwear product having components co-molded in accordance with aspects hereof.

### DETAILED DESCRIPTION OF THE INVENTION

The subject matter herein is described with specificity to meet statutory requirements. However, the description itself is not intended to limit the scope of this patent. Rather, the inventor has contemplated that the claimed subject matter might also be embodied in other ways, to include different elements or combinations of elements similar to the ones described in this document, in conjunction with other present or future technologies.

Aspects hereof contemplate a multi-part manufacturing tool (*e.g.,* a two-part mold) that is effective for the co-molding of two or more different materials. The multi-part manufacturing tool provides for flexible and efficient manufacturing processes and tooling inventory. For example, it is contemplated that a first part of the multi-part manufacturing tool (*e.g.,* a carrier mold portion discussed hereafter) may serve as a common platform into which a variety of second parts (*e.g.,* flexible tray mold portions discussed hereafter) may cooperate interchangeably. Therefore, the multi-part manufacturing tool having interchangeable portions allows for a variety of distinct tooling options without having discrete tools for each combination, in exemplary aspects. Further, the interchangeability of the multi-part manufacturing tool facilitates a co-molding operation with a first material being molded in a part of the multi-part manufacturing tool prior to the part being placed in cooperation with other parts of the multi-part manufacturing tool. This separation of parts and steps may allow for materials and/or techniques associated with the first material to be implemented without consideration for the other parts and materials of the multi-part manufacturing tool, as will be discussed in greater detail hereafter.

Aspects hereof relate to a multi-part manufacturing tool for co-molding products, *e.g.,* components forming articles of footwear. The multi-part manufacturing tool includes a carrier mold portion and a tray mold portion. The carrier mold portion includes a sunken top surface and at least one perimeter sidewall. The sunken top surface is contoured such that it defines a shape of at least one surface of the co-molded article. By way of example, when-co-molding articles of footwear, the sunken top surface may define a contoured midsole surface to which an outsole surface may be coupled. The at least one perimeter sidewall may be contoured into a closed unit that mirrors the desired geometric contour of the lateral surfaces of a co-molded product manufactured using the multi-part manufacturing tool. By way of example, when co-molding articles of footwear, the at least one perimeter sidewall may be contoured to define a desired lateral midsole geometry of a co-molded footwear component. An internal surface of the at least one perimeter sidewall of the carrier mold portion cooperates with the sunken top surface to form a recess.

The tray mold portion includes a top surface that, when not positioned in cooperation with the carrier mold portion (as more fully described hereafter), has a substantially planar perimeter portion, and a perimeter edge of a size and shape to tightly yet removably fit within the recess of the carrier mold portion such that the perimeter edge contacts the internal surface of the at least one perimeter sidewall of the carrier mold portion. The top surface of the tray mold portion includes one or more cavities therein that are bound by sidewalls and configured to receive a plurality of materials for defining the material pattern of at least one surface of the co-molded product (*e.g.,* an outsole surface of a co-molded component of an article of footwear). In aspects hereof, the tray mold portion is formed of a flexible material such that when placed in cooperation with the carrier mold portion, the tray mold portion conforms to the contoured sunken top surface of the carrier mold portion.

Aspects hereof further relate to a method of manufacturing a co-molded product, for instance, an article of footwear, utilizing a multi-part mold. A first mold portion configured as a three-dimensional contoured carrier mold is provided that includes a sunken top surface and at least one perimeter sidewall. The sunken top surface is contoured such that it defines at least one surface of a co-molded article. By way of example, when-co-molding articles of footwear, the sunken top surface may define a contoured midsole surface to which an outsole surface may be coupled. The at least one perimeter sidewall is contoured into a closed unit that provides definition to the lateral surfaces of the co-molded product. By way of example, when the co-molded product is an article of footwear, the perimeter sidewall may be contoured into a closed unit that defines the lateral midsole geometry of the resultant co-molded footwear product. An internal surface of the perimeter sidewall cooperates with the sunken top surface to form a recess.

Also provided is a second mold portion configured as a contoured tray mold having a bottom surface, a top surface, and a perimeter edge of a size and shape to tightly yet removably fit within the recess defined by the carrier mold portion such that the perimeter edge contacts the internal surface of the perimeter sidewall of the carrier mold portion. When not positioned in cooperation with the first (carrier) mold portion (as more fully described hereafter), the bottom surface of the tray mold portion is substantially planar and the top surface includes a substantially planar perimeter portion. The top surface of the tray mold portion includes one or more cavities that are bound by sidewalls and configured to receive a plurality of materials for defining the material pattern of at least one surface of the co-molded product (*e.g.,* an outsole surface of a co-molded component of an article of footwear). In aspects hereof, the second (tray) mold portion is formed of a flexible material such that when placed in cooperation with the first (carrier) mold portion, the tray mold portion conforms to the contoured sunken top surface of the carrier mold portion.

With the second (tray) mold portion not in cooperation with the second (carrier) mold portion (as more fully described hereafter), a first material is applied to at least one of the cavities of the tray mold portion. As in this position the bottom surface and the perimeter portion of the top surface of the tray mold portion are substantially planar, first materials that are in a substantially liquid state may be applied to one or more cavities of the tray mold portion without substantial displacement of the first material from its desired cavity or cavities. As the first material begins to at least partially cure or catalyze such that displacement from its desired cavity or cavities is less likely, even as the bottom surface and the perimeter portion of the top surface are moved out of a substantially planar condition, the tray mold portion is positioned tightly yet removably within the recess of the carrier mold portion such that the bottom surface of the tray mold portion faces the contoured sunken top surface of the carrier mold portion. Before the first material is completely cured/catalyzed, a second material is applied to the recess of the carrier mold portion while the tray mold portion is positioned in cooperation therewith such that the second material fills any cavities of the tray mold portion not filled by the first material, covers the first material in those cavities of the tray mold portion filled by the first material, and covers the sidewalls that provide boundaries to the plurality of cavities. When curing/catalyzing of both the first and second materials substantially complete, the co-molded product having the desired contours and desired material pattern of at least one surface, may be removed from the multi-part mold.

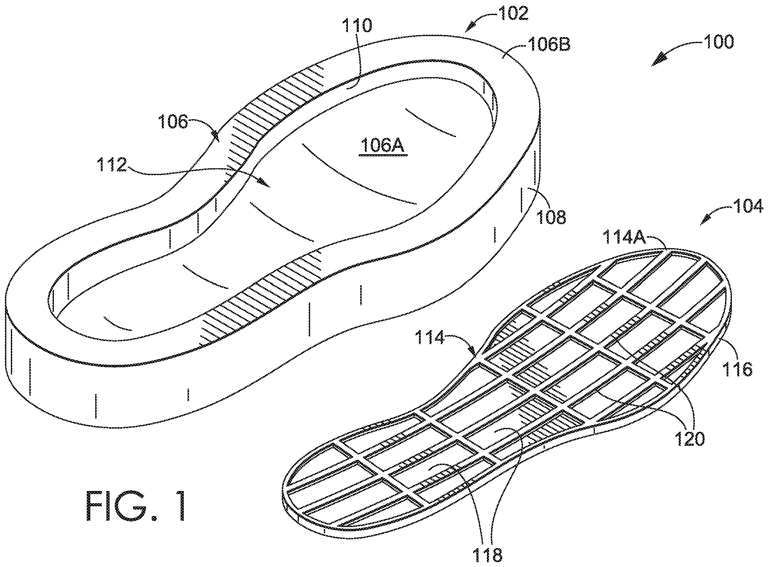

Turning now to FIG. 1, a perspective view of a two-part footwear mold 100 is depicted having a carrier mold portion 102 and a tray mold portion 104, the carrier mold portion 102 and the tray mold portion 104 not in cooperation with one another. A two-part footwear mold 100 in accordance with aspects hereof may be configured for use with various kinds of footwear including, but not limited to: hiking boots, soccer shoes, football shoes, sneakers, running shoes, cross-training shoes, rugby shoes, basketball shoes, baseball shoes, sandals, slides, and the like. However, it should be understood that the novel concepts hereof could be employed on other types of footwear.

The carrier mold portion 102 includes a top surface 106 comprised of a sunken central portion 106A and a non-sunken perimeter portion 106B. The carrier mold portion 102 further includes at least one perimeter sidewall 108. An internal surface 110 of the at least one perimeter sidewall 108 cooperates with the sunken central portion 106A of the top surface 106 to form a recess 112. The recess 112 defines, at least in part, a size and shape of a desired midsole geometry and is configured to tightly yet removably house the tray mold portion 104, as more fully described hereafter. In aspects, the carrier mold portion 102 is comprised of a metallic material, *e.g.,* aluminum.

The tray mold portion 104 includes a top surface 114 and a perimeter edge 116. The top surface 114 includes a perimeter portion 114A that is substantially planar when the tray mold portion 104 is not in cooperation with the carrier mold portion 102. The top surface 114 further includes a plurality of cavities or pods 118, each cavity 118 being bound by sidewalls 120 and configured for receiving a plurality of materials, as more fully described hereafter. The perimeter edge 116 of the tray mold portion 104 is of a size and shape to ensure that the tray mold portion 104 tightly yet removably fits within the recess 112 of the carrier mold portion 102 such that the perimeter edge 116 contacts the internal surface 110 of the at least one perimeter sidewall 108 of the carrier mold portion 102 when the carrier mold portion 102 and the tray mold portion 104 are mated, *i.e*., when the carrier mold portion 102 and the tray mold portion 104 are in cooperation with one another.

In aspects, the tray mold portion 104 is comprised of a flexible polymeric material, for example, silicon. In accordance with such aspects, the tray mold portion 104 is configured to conform to the contour of the sunken central portion 106A of the top surface 106 of the carrier mold portion 102 when the carrier mold portion 102 and the tray mold portion 104 are in cooperation with one another. In aspects, the tray mold portion 104 further is comprised of at least one dopant for increasing the thermal conductivity of the polymeric material. For example, the dopant may be a metallic material (*e.g.,* aluminum, steel, iron, copper) or other material (*e.g.,* graphene, carbon nanotubes, minerals) that is dispersed throughout (or selectively included, such as being absent from a molding surface of the tray mold portion 104) the material forming the tray mold portion 104. For example, if thermal energy is useful in the curing of a material to be molded in the tray mold portion 104, the dopant may allow for a more efficient conductivity of thermal energy from a source (*e.g.,* heating coils) through the tray mold portion 104 to the material being molded. This increase in efficiency created by inclusion of one or more dopants in the material forming the tray mold portion 104 may reduce processing time to cure (or partially cure) the molded material resulting in a faster cycle time during manufacturing. Additionally, it is contemplated that a dopant that is reactive to an energy source (*e.g.,* microwave energy) to convert the energy from the source into thermal energy more efficiently than the material forming the tray mold portion 104. As with the thermal conductivity example *supra,* a dopant effective to convert energy into thermal energy may be included to increase the effectiveness of the tray mold portion 104 in a molding operation.

The tray mold portion 104 may be manufactured via a variety of techniques including, but not limited to, casting, thermoforming, injecting, or machining. The particular manufacturing technique utilized may change based upon variables such as, by way of example only, the specific material from which the tray mold portion 104 is manufactured, the quantity of tools required for manufacturing, the design details, and tool durability and volume. The particular method or materials for manufacturing the tray mold portion 104 are not intended to limit the scope of concepts contemplated herein in any way.

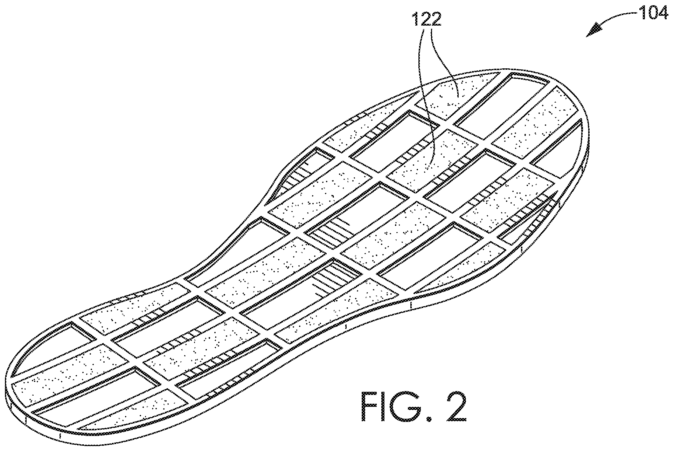

Turning now to FIG. 2, a perspective view of the tray mold portion 104 of FIG. 1 is illustrated having a first material 122 applied to a portion of the plurality of cavities 118 in the top surface 114 thereof, the portion of the plurality of cavities 118 comprising less than all of the plurality of cavities 118. In aspects, the first material 122 is a thermoset material (*e.g.,* polyurethane, polyester, vulcanized rubber, epoxy) that will irreversibly cure when exposed to the appropriate conditions (*e.g.,* sufficient thermal energy, chemical reaction, or irradiation). In aspects, the first material 122 may be applied to the portion of the plurality of cavities 118 utilizing robotically controlled dosing or metering heads. It will be understood and appreciated by those having ordinary skill in the art, however, that the mechanism for applying material to the cavities 118 of the tray mold portion 104 is not intended to limit the scope of concepts contemplated herein in any way.

Applying the first material 122 to a portion of the plurality of cavities 118 that includes less than all of the plurality of cavities 118 enables different materials to comprise different portions of at least one surface of a resultant co-molded product. As such, a footwear product having a surface (*e.g.,* a bottom surface that may serve as a ground-contacting surface) comprised of multiple materials in different regions thereof may be produced without the need for fabricating outsole components or lugs independently and injecting, compression molding, or manually positioning them into place. For example, it is contemplated that a first thermoset material may be positioned in places of the product that may leverage material characteristics of the thermoset material while having a second material (e.g., thermoplastic foam) in other portions of the product. Specifically, it is contemplated that an abrasion resistant material and/or traction-inducing material may be placed at locations on a shoe outsole corresponding with a wearer's toes, ball, and/or heel while an impact-absorbing material form the other portions, in an example.

While concepts herein contemplate mating the carrier mold portion 102 and the tray mold portion 104 in cooperation with one another prior to application of the first material 122 to a portion of the plurality of cavities 118 of the tray mold portion 104, in other aspects, the first material 122 is applied to a portion of the plurality of cavities 118 while the carrier mold portion 102 and the tray mold portion 104 are not in cooperation with one another, as shown in FIG. 1. When the carrier mold portion 102 and the tray mold portion 104 are not in cooperation with one another, the perimeter portion 114A of the top surface 114 of the tray mold portion 104 may be maintained substantially in a continuous horizontal plane. In this way, the first material 122 applied to the portion of the plurality of cavities 118 is more likely to stay in place within the portion of the plurality of cavities 118 irrespective of its viscosity (*e.g.,* to maintain the material in a predetermined cavity while still in a flowing viscous state). Once the first material 122 applied to the portion of the plurality of cavities 118 begins to cure/catalyze (*e.g.,* when the first material 122 is a thermoset material and is exposed to the appropriate thermal conditions for initiating curing thereof), the tray mold portion 104 may be moved into cooperation with the carrier mold portion 102 with decreased risk of the first material 122 being displaced.

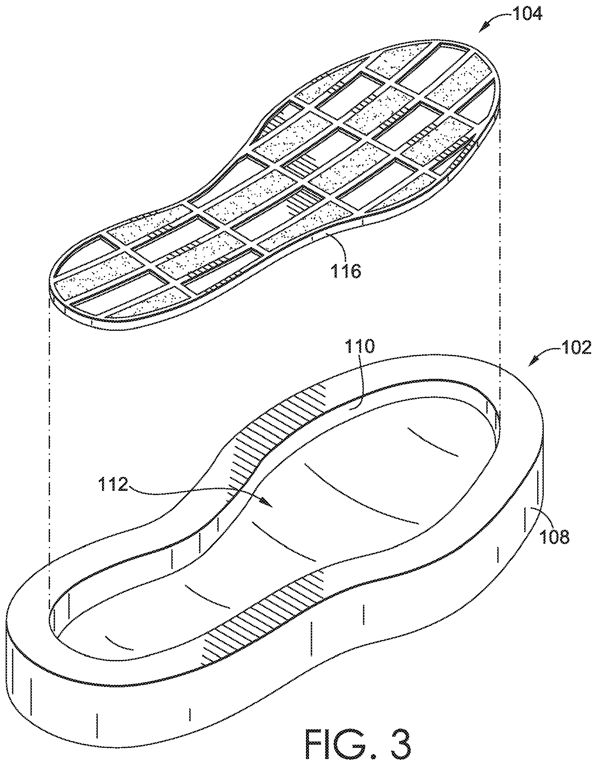

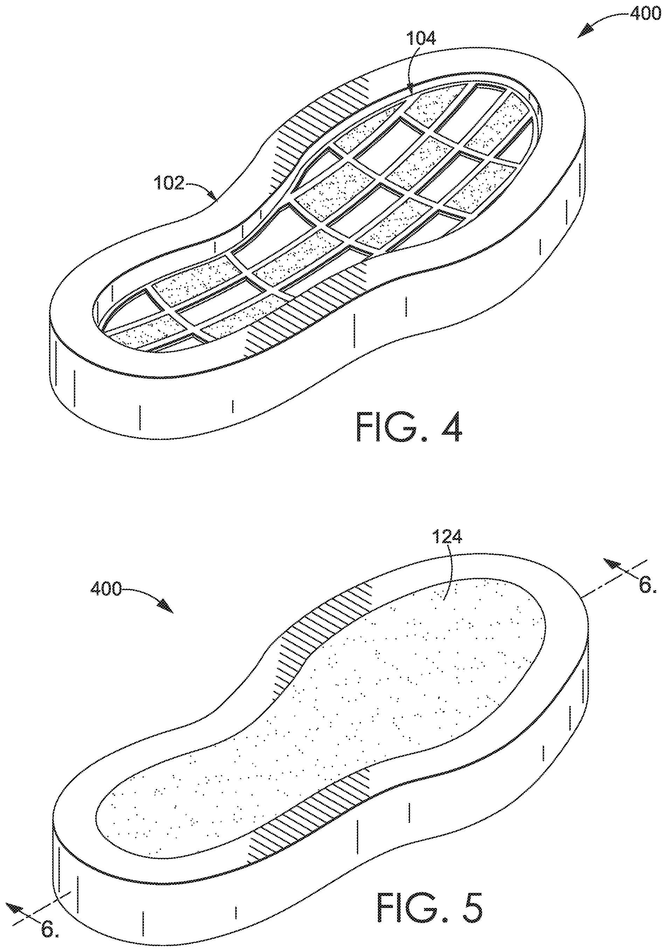

Turning to FIG. 3, a perspective view of the tray mold portion 104 of FIG. 2 is depicted in the process of being positioned in cooperation with the carrier mold portion 102 of FIG. 1. As previously stated, the perimeter edge 116 of the tray mold portion 104 is of a size and shape to ensure that the tray mold portion 104 tightly yet removably fits within the recess 112 of the carrier mold portion 102. A seal may be formed between the tray mold portion 104 and the carrier mold portion 102 by the tight fit that is effective to prevent the entry of a material to be molded into a volume of the recess 112 also occupied by the tray mold portion 104. When the carrier mold portion 102 and the tray mold portion 104 are in cooperation with one another, the perimeter edge 116 of the tray mold portion 104 contacts the internal surface 110 of the at least one perimeter sidewall 108 of the carrier mold portion 102. In aspects where the tray mold portion 104 is comprised of a flexible material (for example, silicon), when the carrier mold portion 102 and the tray mold portion 104 are in cooperation with one another as shown in FIG. 3, the bottom surface (not visible in the view of FIG. 3) of the tray mold portion 104 contacts the sunken central portion 106A of the top surface 106 of the carrier mold portion 102 and the tray mold portion 104 conforms to the contour of the sunken central portion 106A. A fully-mated view of the two-part footwear mold 400, that is, a view of the carrier mold portion 102 and the tray mold portion 104 in cooperation with one another, is illustrated in the perspective view of FIG. 4.

Before the first material 122 is substantially completely cured/catalyzed, a second material 124 is applied (*e.g.,* cast) to the mated two-part footwear mold 400 of FIG. 4. The timing of application of the second material prior to a full cure/set/catalyze state of the first material may allow for a mechanical and/or chemical bond between the first and second materials without supplemental adhesives or binders. Stated differently, application of the second material to the yet-to-be-fully-cured first material facilitates a mechanical and/or chemical bond there between that is effective to co-mold the discrete materials as a common component without supplemental adhesives. In aspects, the second material 124 is a foam material, *e.g.,* a foam material known to those of skill in the art to be fit for use in manufacturing footwear midsoles, such as ethyl vinyl acetate (EVA). In aspects, prior to application of the second material 124, a coating may be applied to an exposed surface of the first material 122 at the locations where the first material fills the portion of the plurality of cavities 118. Such pre-coating may serve to decrease creeping of a color or other such property that may differ between the first material 122 and the second material 124 while still allowing for a mechanical and/or chemical bond between the first material 122 and the second material 124.

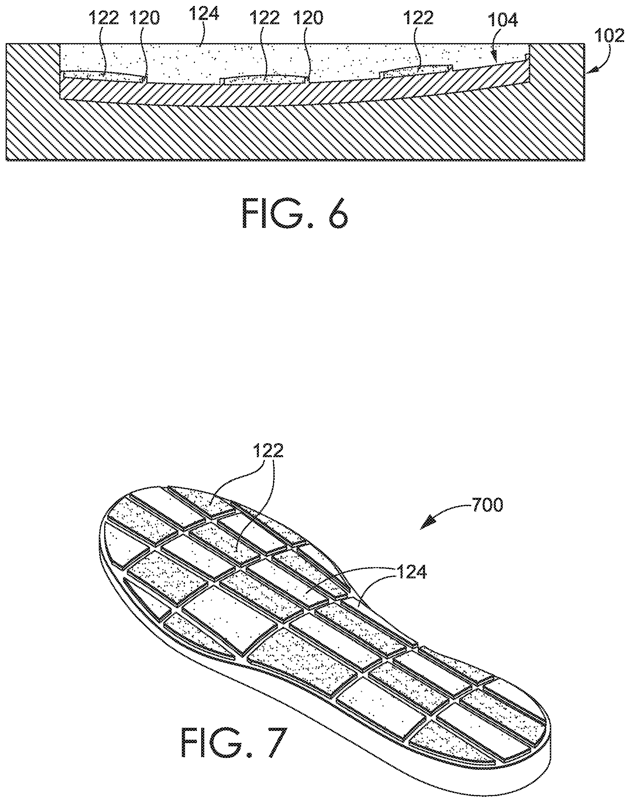

With reference to FIG. 5, a perspective view of the mated two-part footwear mold 400 of FIG. 4 is depicted with the second material 124 applied to the recess 112 of the carrier mold portion 102 having the tray mold portion 104 positioned in cooperation therewith. As can be seen in the cross-sectional view of the mated two-part footwear mold of FIG. 6, the cross-section being taken along line 6.-6., the second material 124 fills those cavities of the plurality 118 that were not filled by the first material 122, as well as covering the first material 122 in the locations where the plurality of cavities 118 was filled with the first material 122 and the cavity sidewalls 120. Because the first material 122 is not completely cured/catalyzed before the second material 124 is applied, the two materials join to one another to create a single resultant product, such as through chemical bonding of the two materials as they co-cure.

After both the first and second materials 122, 124 have sufficiently cured/catalyzed, the footwear product may be removed from the mated two-part mold 400 and the tray mold portion 104 subsequently may be removed from the carrier mold portion 102. Because the tray mold portion 104 is not removed from the carrier mold portion 102 until the footwear product is removed from the mated two-part mold 400, flashing of the second material 124 onto the first material 122 is reduced.

FIG. 7 depicts an exemplary co-molded footwear product 700 once it is removed from the mated two-part mold of FIG. 6. As can be seen, portions of the bottom surface of the co-molded footwear product 700 are comprised of the first material 122 and other portions of the bottom surface of the co-molded footwear product 700 are comprised of the second material 124. In this way, a co-molded product manufactured utilizing a multi-part mold in accordance with aspects hereof includes the desired contours (represented by the perimeter sidewall of the carrier mold portion) and desired material pattern of at least one surface - due to the cavities to which material is applied while the tray mold portion is substantially in a continuous horizontal plane.

As can be seen, aspects hereof relate to a multi-part mold for molding articles, for instance, articles of footwear having outsole regions of differing materials forming a desired outsole surface material pattern. Aspects hereof further relate to a method of manufacturing co-molded products, for instance, components of articles of footwear, utilizing a multi-part mold. A multi-part mold having the structure as described herein permits interchangeability of multiple tray mold portions with a single carrier mold portion. A multi-part mold having the structure as described herein further enables low-cost, modular tooling for the production of certain products, for instance, cast footwear outsoles. For example, it is contemplated that a common carrier mold portion may be used with distinctly different tray mold portions that result in a varied traction pattern while having a common midsole shape and design. This modularity can reduce a number of unique tools needed to achieve each of the possible combinations available through the interchangeable modular structure of the multi-part mold. Further, it is contemplated that an initial curing process may be initiated with material in the tray mold portion that would not be appropriate for exposure of the carrier mold portion. For example, if a first material is cured by exposure to radio-frequency energy (e.g., microwave) and the carrier mold is formed from a metallic material and the tray mold is formed from a silicon-based material, the tray mold may be exposed to the radio-frequency energy while the carrier mold may not be suitable for exposure to the radio frequency energy. In this example, the ability to have the tray mold portion not in cooperation with the carrier mold facilitates the curing of the first material.

Although the multi-part mold and method of manufacturing co-molded products utilizing a multi-part mold are described above by referring to particular aspects, it should be understood that modifications and variations could be made without departing from the intended scope of protection provided by the following claims.

## Claims

1. A manufacturing tool for use in manufacturing articles of footwear comprising: a tray mold Portion (104) comprising: a top surface (114) with a substantially planar perimeter portion (114A), the top surface (114) including one or more cavities (118) therein; and a perimeter edge (116) of a size and shape to removably fit within a recess (112) of a carrier mold portion (102) shaped to define a midsole geometry, the carrier mold portion (102) having at least one perimeter sidewall (108), wherein an internal surface (110) of the at least one perimeter sidewall (108) contacts the perimeter edge (116) of the tray mold portion (104) when the tray mold portion (104) and the carrier mold portion (102) are removably mated together.

2. The manufacturing tool of claim 1, wherein the carrier mold portion is comprised of a metallic material, wherein the metallic material may be aluminum.

3. The manufacturing tool of any of claims 1 through 2, wherein the tray mold portion is comprised of a flexible polymeric material, wherein the flexible polymeric material may be silicon.

4. The manufacturing tool of any of claims 1 through 3, wherein the tray mold portion is further comprised of at least one dopant.

5. The manufacturing tool of any of claims 1 through 4, comprising a plurality of tray mold portions sized and shaped to removably fit within the recess of the carrier mold portion such that respective perimeter edges thereof contact the internal surface of the at least one perimeter sidewall of the carrier mold portion, each of the plurality of tray mold portions having a respective top surface that includes a pattern of cavities that differs from cavity patterns of the other tray molds of the plurality.

6. A manufacturing tool for co-molding articles of footwear comprising: a carrier mold portion (102) having a top surface (106) with a sunken central portion (106A) and a non-sunken perimeter portion (106B), and at least one perimeter sidewall (108) contoured into a closed unit that defines a midsole geometry, wherein an internal surface of the at least one perimeter sidewall (108) cooperates with the sunken central portion (106A) of the top surface (106) to form a recess (112); and a tray mold portion (104) having a top surface (114) with a substantially planar perimeter portion (114A), and a perimeter edge (116) of a size and shape to removably fit within the recess (112) such that the perimeter edge (116) contacts the internal surface (110) of the at least one perimeter sidewall (108) of the carrier mold portion (102), wherein the top surface (114) of the tray mold portion (104) includes one or more cavities (118) each bounded by at least one cavity sidewall (120).

7. A method for co-molding articles of footwear comprising: providing a carrier mold a top surface (106) with a sunken central portion (106A) and a non-sunken perimeter portion (106B), and at least one perimeter sidewall (108) contoured into a closed unit that defines a midsole geometry, wherein an internal surface (110) of the at least one perimeter sidewall (108) cooperates with the sunken central portion (106A) of the top surface (106) to form a recess (112); providing a tray mold portion (104) having a top surface (114) with a substantially planar perimeter portion (114A), and a perimeter edge of a size and shape to removably fit within the recess (112) such that the perimeter edge contacts the internal surface (110) of the at least one perimeter sidewall (108) of the carrier mold portion (102), wherein the top surface (114) includes one or more cavities (118) each bounded by at least one cavity sidewall (120); applying a first material to at least one of the one or more cavities (118) of the tray mold portion (104); positioning the tray mold portion (104) within the recess (112) of the carrier mold portion (102) such that the perimeter edge of the tray mold portion (104) contacts the internal surface (110) of the at least one perimeter sidewall (108) of the carrier mold portion (102); and applying a second material to the recess (112) of the carrier mold portion (102) while the tray mold portion (104) is positioned therein.

8. The method of claim 7, wherein the first material is a thermoset material; and/or
wherein the second material is a foam material.

9. The method of any of claims 7 through 8 further comprising applying a coating to the first material prior to applying the second material to the recess of the carrier mold.

10. The method of claims 7 through 9, wherein the tray mold is comprised of a flexible polymeric material, wherein the flexible polymeric material may be silicon.

11. The method of any of claims 7 through 10, wherein the tray mold portion is further comprised of at least one dopant; and/or
wherein the carrier mold is comprised of a metallic material.

12. The method of claim 11, wherein the metallic material is aluminum.

13. The method of any of claims 7 through 12, further comprising exposing the first material to a curing condition for the first material prior to positioning the tray mold within the recess of the carrier mold.

14. The method of any of claims 7 through 12, further comprising exposing the first material to a curing condition for the first material subsequent to positioning the tray mold within the recess of the carrier mold.

15. The method of any of claims 7 through 14, further comprising exposing the second material to a curing condition subsequent to applying the second material to the recess of the carrier mold, wherein the second material and the first material form a co-molded article.

## Patentansprüche

1. Herstellungswerkzeug zur Verwendung bei der Herstellung von Schuhartikeln umfassend:
einen Schalenformabschnitt (104) umfassend:
eine obere Oberfläche (114) mit einem im Wesentlichen ebenen Umfangsabschnitt (114A), wobei die obere Oberfläche (114) einen oder mehrere Hohlräume (118) darin umfasst;
und einen Umfangsrand (116) einer Größe und Form, um lösbar in eine Aussparung (112) eines Trägerformabschnitts (102) zu passen, der geformt ist, um eine Zwischensohlengeometrie zu bestimmen, wobei der Trägerformabschnitt (102) mindestens eine Umfangsseitenwand (108) aufweist, wobei eine innere Oberfläche (110) der mindestens einen Umfangsseitenwand (108) den Umfangsrand (116) des Schalenformabschnitts (104) berührt, wenn der Schalenformabschnitt (104) und der Trägerformabschnitt (102) lösbar zusammengefügt sind.

2. Herstellungswerkzeug nach Anspruch 1, wobei der Trägerformabschnitt aus einem metallischen Material besteht, wobei das metallische Material Aluminium sein kann.

3. Herstellungswerkzeug nach einem beliebigen der Ansprüche 1 bis 2, wobei der Trägerformabschnitt aus einem flexiblen Polymermaterial besteht, wobei das flexible Polymermaterial Silikon sein kann.

4. Herstellungswerkzeug nach einem beliebigen der Ansprüche 1 bis 3, wobei der Schalenformabschnitt ferner mindestens einen Dotierstoff umfasst.

5. Herstellungswerkzeug nach einem beliebigen der Ansprüche 1 bis 4, umfassend eine Vielzahl von Schalenformabschnitten, die bemessen und geformt sind, um lösbar in die Aussparung des Trägerformabschnitts zu passen, sodass dessen jeweilige Umfangsränder die innere Oberfläche der mindestens einen Umfangsseitenwand des Trägerformabschnitts berühren, wobei jede Vielzahl der Trägerformabschnitte eine jeweilige obere Oberfläche aufweist, die ein Muster aus Hohlräumen umfasst, das sich von den Hohlraummustem der anderen Schalenformen der Vielzahl unterscheidet.

6. Herstellungswerkzeug zum Eingießen von Schuhartikeln umfassend:
einen Trägerformabschnitt (102), der eine obere Oberfläche (106) mit einem vertieften Mittelabschnitt (106A) und einem nicht vertieften Umfangsabschnitt (106B), und mindestens eine Umfangsseitenwand (108) aufweist, die zu einer geschlossenen Einheit konturiert ist, die eine Zwischensohlengeometrie bestimmt, wobei eine innere Oberfläche der mindestens einen Umfangsseitenwand (108) mit dem vertieften Mittelabschnitt (106A) der oberen Oberfläche (106) zusammenwirkt, um eine Aussparung (112) zu bilden;
und einen Schalenformabschnitt (104), der eine obere Oberfläche (114) mit einem im Wesentlichen ebenen Umfangsabschnitt (114A) und einen Umfangsrand (116) einer Größe und Form aufweist, der lösbar in die Aussparung (112) passt, sodass der Umfangsrand (116) die innere Oberfläche (110) der mindestens einen Umfangsseitenwand (108) des Trägerformabschnitts (102) berührt, wobei die obere Oberfläche (114) des Schalenformabschnitts (104) einen oder mehrere Hohlräume (118) umfasst, der/die jeweils von mindestens einer Hohlraum-Seitenwand (120) begrenzt wird/werden.

7. Verfahren zum Eingießen von Schuhartikeln umfassend:
Bereitstellen einer Trägerform einer oberen Oberfläche (106) mit einem vertieften Mittelabschnitt (106A) und einem nicht vertieften Umfangsabschnitt (106B) und mindestens einer Umfangsseitenwand (108), die zu einer geschlossenen Einheit konturiert ist, die eine Zwischensohlengeometrie bestimmt, wobei eine innere Oberfläche (110) der mindestens einen Umfangsseitenwand (108) mit dem vertieften Mittelabschnitt (106A) der oberen Oberfläche (106) zusammenwirkt, um eine Aussparung (112) zu bilden;
Bereitstellen eines Schalenformabschnitts (104), der eine obere Oberfläche (114) mit einem im Wesentlichen ebenen Umfangsabschnitt (114A) und einen Umfangsrand einer Größe und Form aufweist, um lösbar in die Aussparung (112) zu passen, sodass der Umfangsrand die innere Oberfläche (110) der mindestens einen Umfangsseitenwand (108) des Trägerformabschnitts (102) berührt, wobei die obere Oberfläche (114) einen oder mehrere Hohlräume (118) umfasst, der/die jeweils von mindestens einer Hohlraum-Seitenwand (120) begrenzt ist/sind;
Aufbringen eines ersten Materials in mindestens einen des einen oder der mehreren Hohlräume (118) des Schalenformabschnitts (104);
Positionieren des Schalenformabschnitts (104) in der Aussparung (112) des Trägerformabschnitts (102), sodass der Umfangsrand des Schalenformabschnitts (104) die innere Oberfläche (110) der mindestens einen Umfangsseitenwand (108) des Trägerformabschnitts (102) berührt;
und Aufbringen eines zweiten Materials in die Aussparung (112) des Trägerformabschnitts (102), während der Schalenformabschnitt (104) darin positioniert ist.

8. Verfahren nach Anspruch 7, wobei das erste Material ein Duroplast ist; und/oder
wobei das zweite Material ein Schaumstoff ist.

9. Verfahren nach einem beliebigen der Ansprüche 7 bis 8, ferner umfassend das Aufbringen einer Beschichtung auf das erste Material vor dem Aufbringen des zweiten Materials in die Aussparung der Trägerform.

10. Verfahren nach Ansprüchen 7 bis 9, wobei die Schalenform aus einem flexiblen Polymermaterial besteht, wobei das flexible Polymermaterial Silikon sein kann.

11. Verfahren nach einem beliebigen der Ansprüche 7 bis 10, wobei der Schalenformabschnitt ferner aus mindestens einem Dotierstoff besteht; und/oder
wobei die Trägerform aus einem metallischen Material besteht.

12. Verfahren nach Anspruch 11, wobei das metallische Material Aluminium ist.

13. Verfahren nach einem beliebigen der Ansprüche 7 bis 12, ferner umfassend das Aussetzen des ersten Materials einem Aushärtungszustand für das erste Material vor dem Positionieren der Schalenform in der Aussparung der Trägerform.

14. Verfahren nach einem beliebigen der Ansprüche 7 bis 12, ferner umfassend das Aussetzen des ersten Materials einem Aushärtungszustand für das erste Material nach dem Positionieren der Schalenform in der Aussparung der Trägerform.

15. Verfahren nach einem beliebigen der Ansprüche 7 bis 14, ferner umfassend das Aussetzen des zweiten Materials einem Aushärtungszustand nach dem Aufbringen des zweiten Materials in die Aussparung der Trägerform, wobei das zweite Material und das erste Material ein eingegossener Artikel sind.

## Revendications

1. Outil de fabrication destiné à être utilisé dans la fabrication d'articles de chaussures, comportant : une portion de moule de plateau (104) comportant : une surface de dessus (114) avec une portion périmétrique sensiblement plane (114A), la surface de dessus (114) incluant une ou plusieurs cavités (118) en son sein ; et un bord périmétrique (116) d'une taille et d'une forme permettant de l'adapter de manière amovible au sein d'un évidement (112) d'une portion de moule de support (102) façonnée pour définir une géométrie de semelle intermédiaire, la portion de moule de support (102) ayant au moins une paroi latérale périmétrique (108), dans lequel une surface interne (110) de la au moins une paroi latérale périmétrique (108) entre en contact avec le bord périmétrique (116) de la portion de moule de plateau (104) lorsque la portion de moule de plateau (104) et la portion de moule de support (102) sont accouplées ensemble de manière amovible.

2. Outil de fabrication selon la revendication 1, dans lequel la portion de moule de support est composée d'un matériau métallique, dans lequel le matériau métallique peut être de l'aluminium.

3. Outil de fabrication selon l'une quelconque des revendications 1 à 2, dans lequel la portion de moule de plateau est composée d'un matériau polymère flexible, dans lequel le matériau polymère flexible peut être de la silicone.

4. Outil de fabrication selon l'une quelconque des revendications 1 à 3, dans lequel la portion de moule de plateau est en outre composée d'au moins un dopant.

5. Outil de fabrication selon l'une quelconque des revendications 1 à 4, comportant une pluralité de portions de moule de plateau dimensionnées et façonnées afin de s'adapter de manière amovible au sein de l'évidement de la portion de moule de support, de sorte que les bords périmétriques respectifs de celles-ci entrent en contact avec la surface interne de la au moins une paroi latérale périmétrique de la portion de moule de support, chaque portion parmi la pluralité de portions de moule de plateau ayant une surface de dessus respective qui inclut un motif de cavité qui diffère des motifs de cavité des autres moules de plateau parmi la pluralité.

6. Outil de fabrication pour co-mouler des articles de chaussures comportant :
une portion de moule de support (102) ayant une surface de dessus (106) avec une portion centrale enfoncée (106A) et une portion périmétrique non enfoncée (106B) et au moins une paroi latérale périmétrique (108) confinée dans une unité fermée qui définit une géométrie de semelle intermédiaire, dans lequel une surface interne de la au moins une paroi latérale périmétrique (108) coopère avec la portion centrale enfoncée (106A) de la surface de dessus (106) afin de constituer un évidement (112) ;
et une portion de moule de plateau (104) ayant une surface de dessus (114) avec une portion périmétrique sensiblement plane (114A) et un bord périmétrique (116) d'une taille et d'une forme permettant de l'adapter de manière amovible au sein de l'évidement (112), de sorte que le bord périmétrique (116) entre en contact avec la surface interne (110) de la au moins une paroi latérale périmétrique (108) de la portion de moule de support (102), dans lequel la surface de dessus (114) de la portion de moule de plateau (104) inclut une ou plusieurs cavités (118), chacune délimitée par au moins une paroi latérale de cavité (120).

7. Procédé pour co-mouler des articles de chaussures comportant : la fourniture d'un moule de support d'une surface de dessus (106) avec une portion centrale enfoncée (106A) et une portion périmétrique non enfoncée (106B) et au moins une paroi latérale périmétrique (108) confinée dans une unité fermée qui définit une géométrie de semelle intermédiaire, dans lequel une surface interne (110) de la au moins une paroi latérale périmétrique (108) coopère avec la portion centrale enfoncée (106A) de la surface de dessus (106) afin de former un évidement (112) ; la fourniture d'une portion de moule de plateau (104) ayant une surface de dessus (114) avec une portion périmétrique sensiblement plane (114A) et un bord périmétrique d'une taille et d'une forme permettant de l'adapter de manière amovible au sein de l'évidement (112), de sorte que le bord périmétrique entre en contact avec la surface interne (110) de la au moins une paroi latérale périmétrique (108) de la portion de moule de support (102), dans lequel la surface de dessus (114) inclut une ou plusieurs cavités (118), chacune délimitée par au moins une paroi latérale de cavité (120) ;
l'application d'un premier matériau à au moins une de la ou des cavités (118) de la portion de moule de plateau (104) ;
le positionnement de la portion de moule de plateau (104) au sein de l'évidement (112) de la portion de moule de support (102), de sorte que le bord périmétrique de la portion de moule de plateau (104) entre en contact avec la surface interne (110) de la au moins une paroi latérale périmétrique (108) de la portion de moule de support (102) ; et l'application d'un second matériau à l'évidement (112) de la portion de moule de support (102), tandis que la portion de moule de plateau (104) est positionnée en son sein.

8. Procédé selon la revendication 7, dans lequel le premier matériau est un matériau thermodurcissable ; et/ou
dans lequel le second matériau est un matériau de mousse.

9. Procédé selon l'une quelconque des revendications 7 à 8, comportant en outre l'application d'un revêtement au premier matériau avant l'application du second matériau à l'évidement du moule de support.

10. Procédé selon les revendications 7 à 9, dans lequel le moule de plateau est composé d'un matériau polymère flexible, dans lequel le matériau polymère flexible peut être de la silicone.

11. Procédé selon l'une quelconque des revendications 7 à 10, dans lequel la portion de moule de plateau est en outre composée d'au moins un dopant ; et/ou
dans lequel le moule de support est composé d'un matériau métallique.

12. Procédé selon la revendication 11, dans lequel le matériau métallique est de l'aluminium.

13. Procédé selon l'une quelconque des revendications 7 à 12, comportant en outre l'exposition du premier matériau à une condition de durcissement pour le premier matériau avant le positionnement du moule de plateau au sein de l'évidement du moule de support.

14. Procédé selon l'une quelconque des revendications 7 à 12, comportant en outre l'exposition du premier matériau à une condition de durcissement pour le premier matériau après le positionnement du moule de plateau au sein de l'évidement du moule de support.

15. Procédé selon l'une quelconque des revendications 7 à 14, comportant en outre l'exposition du second matériau à une condition de durcissement après l'application du second matériau à l'évidement du moule de support, dans lequel le second matériau et le premier matériau constituent un article co-moulé.
